# EUROPÄISCHE PATENTANMELDUNG

(11) **EP 3 358 207 A1**
(43) Veröffentlichungstag der Anmeldung: **08.08.2018**
(21) Anmeldenummer: 17154957.9
(22) Anmeldetag: 07.02.2017
(51) Int. Cl.: F16C 33/66, F16C 33/78, F16C 3/02, F16H 57/04, H02K 7/116, F16C 35/04

(54) **WELLE MIT EINER ABSPRITZKANTE ZUM ABFÜHREN ENTLANG DER WELLE EINDRINGENDEN SCHMIERMITTELS MITTELS FLIEHKRAFT**

(71) Anmelder: Siemens Aktiengesellschaft, 80333 München (DE)
(72) Erfinder: Schmidt, Valerias, 90471 Nürnberg (DE)

(57) **Zusammenfassung**

Die Erfindung betrifft eine Lageranordnung (1) für eine Maschinenanordnung, mit
- einer ersten Seite (3), an welcher ein mit einem ersten Schmiermittel (30) schmierbarer erster Maschinenteil (35) anordenbar ist,
- einer zweiten Seite (4), an welcher ein mit einem zweiten Schmiermittel (40) schmierbarer zweiter Maschinenteil anordenbar ist, und
- einer Welle (10) zur Übertragung einer mechanischen Kraft zwischen der ersten Seite (3) und der zweiten Seite (4).
Um den ersten Maschinenteil (35) gegenüber dem Stand der Technik zuverlässiger vor einem Eindringen des zweiten Schmiermittels (40) zu schützen ist vorgesehen, dass die Welle (10) eine Abspritzkante (11) aufweist, die dazu ausgeformt ist, das zweite Schmiermittel (30) beim Eindringen auf die erste Seite (3) in eine Sammeltasche (13) der Lageranordnung (1) zu führen.

## Beschreibung

Die Erfindung betrifft eine Lageranordnung für eine Maschinenanordnung, an der zwei Maschinenteile anordenbar sind, welche mit unterschiedlichen Schmiermittel schmierbar sind. Ein zweiter Aspekt der Erfindung betrifft eine Maschinenanordnung mit der genannten Lageranordnung.

Eine Maschine, insbesondere eine elektrische Maschine, kann mit einem Schmierfett oder mit einem Schmieröl, im folgenden Antriebsöl genannt, als Schmiermittel schmierbar sein. Ein Getriebe, insbesondere zur Umwandlung einer Kraft- oder eines Drehmoments der Maschine, kann mit einem Getriebeöl als Schmiermittel schmierbar sein. Ein jeweiliges Schmiermittel kann dabei zusätzlich zur Schmierung eine Wärmeabfuhr beziehungsweise Kühlung bewirken. Die Maschine und das Getriebe können unterschiedliche Anforderungen an das Schmiermittel stellen. Deshalb ist die Verwendung unterschiedlicher Schmiermittel für die Maschine und das Getriebe vorteilhaft.

Aus dem Stand der Technik ist es bekannt, die Maschine und das Getriebe in einer Maschinenanordnung anzuordnen beziehungsweise zu integrieren. Insbesondere ist die Maschine, insbesondere die elektrische Maschine, in dem Getriebe integriert. Sind unterschiedliche Schmiermittel für das Getriebe und die Maschine in Verwendung, so muss ein Vermischen der Schmiermittel vermieden werden. Beispielsweise darf das Getriebeöl nicht in die Maschine, insbesondere eine fettgeschmierte Maschine, eindringen. Da die Maschine und das Getriebe üblicherweise über eine Welle verbunden sind, kann diese durch einen Wellendichtring als Dichtmittel abgedichtet sein. Aufgrund einer begrenzten Lebensdauer und Dichtwirkung des Dichtmittels ist die Verwendung unterschiedlicher Schmiermittel gemäß dem Stand der Technik nicht üblich. In anderen Worten wird trotz der damit verbundenen Nachteile häufig dasselbe Schmiermittel für die Maschine und das Getriebe verwendet.

Es ist Aufgabe der vorliegenden Erfindung, eine Lageranordnung bereitzustellen, die einen mit einem ersten Schmiermittel schmierbaren ersten Maschinenteil gegenüber dem Stand der Technik zuverlässiger vor einem Eindringen eines zweiten Schmiermittels aus einem zweiten Maschinenteil schützt.

Diese Aufgabe wird erfindungsgemäß gelöst durch eine Lageranordnung mit den Merkmalen des Patentanspruchs 1. Die Erfindung wird außerdem gelöst durch eine Maschinenanordnung mit den Merkmalen des Patentanspruchs 11. Vorteilhafte Ausführungsformen mit zweckmäßigen Weiterbildungen sind Gegenstand der Unteransprüche.

Eine vorliegende Lageranordnung für eine Maschinenanordnung umfasst eine erste Seite, an welcher ein mit einem ersten Schmiermittel schmierbarer erster Maschinenteil anordenbar ist. Bei dem ersten Maschinenteil handelt es sich beispielsweise um eine Maschine, vorzugsweise eine Kraftmaschine, insbesondere eine elektrische Maschine, beispielsweise ein Elektromotor oder ein Generator. Der erste Maschinenteil ist beispielsweise mittels eines Schmierfetts oder eines ersten Schmieröls als das erste Schmiermittel schmierbar. Die Lageranordnung umfasst außerdem eine zweite Seite, an welcher ein mit einem zweiten Schmiermittel schmierbarer zweiter Maschinenteil anordenbar ist. Bei dem zweiten Maschinenteil handelt es sich vorzugsweise um ein Getriebe, insbesondere zur Umwandlung einer Kraft- oder eines Drehmoments des ersten Maschinenteils. Der zweite Maschinenteil ist insbesondere mittels eines zweiten Schmieröls, insbesondere eines Getriebeöls, als das zweite Schmiermittel schmierbar. An das erste Schmiermittel und das zweite Schmiermittel sind insbesondere unterschiedliche Anforderungen gestellt. Das erste Schmiermittel und das zweite Schmiermittel weisen insbesondere unterschiedliche Schmiereigenschaften, physikalische Eigenschaften und/oder chemische Eigenschaften auf.

Die Lageranordnung umfasst eine Welle zur Übertragung einer mechanischen Kraft zwischen der ersten Seite und der zweiten Seite. Alternativ oder zusätzlich ist die Welle zur Übertragung eines Drehmoments zwischen der ersten Seite und der zweiten Seite ausgebildet.

Um nun den ersten Maschinenteil zuverlässiger vor einem Eindringen des zweiten Schmiermittels zu schützen, ist erfindungsgemäß vorgesehen, dass die Welle eine Abspritzkante aufweist, die dazu ausgeformt ist, das zweite Schmiermittel beim Eindringen auf die erste Seite in eine Sammeltasche der Lageranordnung zu führen. Mit anderen Worten ist die Welle derart ausgeformt, dass diese die Abspritzkante aufweist. Beispielsweise weist die Welle bezüglich eines Längsschnittes die Abspritzkante auf. Aufgrund der Formgebung der Welle mit der Abspritzkante, gelangt das zweite Schmiermittel beim Eindringen auf die erste Seite in die Sammeltasche. In einem Längsschnitt der Welle kann die Abspritzkante zwischen zwei Abschnitten der Welle mit jeweils unterschiedlicher Ausrichtung angeordnet sein. Die Sammeltasche kann dazu ausgeformt sein, das zweite Schmiermittel zu sammeln und/oder ein Eindringen des zweiten Schmiermittels in den ersten Maschinenteil zu vermeiden.

Insbesondere ist die Abspritzkante derart ausgeformt, dass Adhäsionskräfte des zweiten Schmiermittels an der Welle zu überwunden aufgrund der Form der Kante überwunden werden können. Im Allgemeinen kann das Auftreten einer Kante, nämlich der Abspritzkante, bereits das Überwinden der Adhäsionskräfte des zweiten Schmiermittels an der Welle ermöglichen. Insbesondere kommt es an der Abspritzkante zur Tröpfchenbildung des zweiten Schmiermittels und damit zu einer Verringerung der Adhäsion an der Welle.

Eine Weiterbildung der Erfindung sieht vor, dass die Lageranordnung eine Schutzwand aufweist. Insbesondere ist durch die Schutzwand zumindest teilweise die Sammeltasche ausgeformt. Mit anderen Worten kann die Lageranordnung eine Schutzwand zum Ausformen der Sammeltasche aufweisen. Insbesondere ist die Schutzwand derart ausgeformt, dass Anteile des zweiten Schmiermittels, die sich nicht in der Sammeltasche ansammeln, an einem Eindringen in den ersten Maschinenteil gehindert sind. Vorzugsweise umgreift die Schutzwand die Welle in Umfangsrichtung. Insbesondere weist die Schutzwand eine Ausnehmung auf, durch welche die Welle hindurch geführt ist und welches einen möglichst geringen Durchmesser aufweist, ohne die Welle zu berühren.

Eine Weiterbildung der Erfindung sieht vor, dass die Lageranordnung ein Dichtmittel aufweist, welches die Welle in Umfangsrichtung umgreift und das zweite Schmiermittel beim Eindringen entlang der Welle führt. Das Dichtmittel kann einen Wellendichtring umfassen, welcher das zweite Schmiermittel an dem Eindringen auf die erste Seite hindert. Das Dichtmittel, insbesondere der Wellendichtring kann verschleißbehaftet sein. Lässt aufgrund des Verschleißes eine Dichtwirkung des Dichtmittels nach, so führt beziehungsweise leitet das Dichtmittel das zweite Schmiermittel beim Eindringen entlang der Welle. Dadurch, dass das Schmiermittel beim Eindringen entlang der Welle geführt ist, ist sichergestellt, dass das zweite Schmiermittel beim Eindringen auf die erste Seite durch die Abspritzkante in die Sammeltasche geführt werden kann.

Eine Weiterbildung der Erfindung sieht vor, dass die Lageranordnung einen Abflusskanal aufweist, der ein Abfließen des zweiten Schmiermittels aus der Sammeltasche in eine Sammelkammer und/oder zu einem Ablauf ermöglicht. Mit anderen Worten ist der Abflusskanal dazu ausgebildet, das zweite Schmiermittel aus der Sammeltasche in die Sammelkammer und/oder zu dem Ablauf zu führen. Die Sammelkammer kann zum Sammeln des zweiten Schmiermittels ausgebildet sein und durch einen Nutzer entleerbar ausgeführt sein. Der Ablauf kann dazu ausgebildet sein, das zweite Schmiermittel aus der Maschinenanordnung und/oder der Lageranordnung auszuscheiden und/oder zu dem zweiten Maschinenteil zurückzuführen.

Besonders vorteilhafter Weise ist die Sammelkammer von außen einsehbar gestaltet. Beispielsweise umfasst die Sammelkammer eine transparente Wandung, beispielsweise aus Glas oder Plexiglas. Dadurch kann der Nutzer von außen erkennen, dass das zweite Schmiermittel auf die erste Seite eingedrungen ist. Insbesondere ist dadurch ersichtlich, dass das Dichtmittel verschlissen ist und vorzugsweise ausgetauscht werden muss.

Eine Weiterbildung sieht vor, dass die Abspritzkante derart ausgeformt ist, in einem Betrieb der Maschinenanordnung das zweite Schmiermittel beim Eindringen auf die erste Seite zumindest teilweise mittels einer Fliehkraft in die Sammeltasche zu führen. Beispielsweise wird das zweite Schmiermittel beim Eindringen entlang der Welle auf die erste Seite an der Abspritzkante aufgrund einer Fliehkraft in die Sammeltasche geschleudert. Die Fliehkraft wirkt auf das zweite Schmiermittel insbesondere deshalb, weil sich die Welle und/oder das zweite Schmiermittel in Rotation befinden.

Eine Weiterbildung sieht vor, dass die Welle einen Abschnitt aufweist, in dem sich von der zweiten Seite ausgehend hin zu der ersten Seite ein Radius der Welle erweitert, wobei an dem Abschnitt mit sich erweiterndem Radius die Abspritzkante gebildet ist. Insbesondere befindet sich der Abschnitt mit sich erweiterndem Radius vollständig auf der ersten Seite der Lageranordnung. In axialer Richtung bezüglich der Welle kann der Abschnitt mit sich erweiterndem Radius durch zwei Grenzen begrenzt sein. Vorzugsweise ist die Abspritzkante an einer der beiden Grenzen ausgebildet. Vorzugsweise ist die Abspritzkante an der Grenze ausgebildet, die den größeren Radius aufweist. Durch den sich erweiternden Radius kann das zweite Schmiermittel bei dem Eindringen entlang der Welle in radialer Richtung beschleunigt werden. Dadurch kann das zweite Schmiermittel an der Abspritzkante besser in die Sammeltasche geführt werden. Insbesondere ist durch die Beschleunigung in radialer Richtung die Überwindung der Adhäsionskräfte des zweiten Schmiermittels besser überwindbar.

Eine Weiterbildung sieht vor, dass an der Abspritzkante ein Winkel von höchstens 135° vorliegt. Andere Weiterbildungen können vorsehen, dass an der Abspritzkante ein Winkel von höchstens 90°, 100°, 110° oder 120° vorliegt. Insbesondere liegt der Winkel an der Abspritzkante zwischen einer ersten und einer zweiten Mantelfläche vor. Die erste und/oder die zweite Mantelfläche können eine tangierende Mantelfläche sein, die eine Steigung der Welle auf jeweils einer Seite der Abspritzkante charakterisieren. Alternativ oder zusätzlich kann die erste Mantelfläche und/oder die zweite Mantelfläche die Ausrichtung der Welle auf jeweils einer Seite der Abspritzkante charakterisieren. In einem Längsschnitt der Welle, erscheinen die erste Mantelfläche und die zweite Mantelfläche als eine erste Tangente und eine zweite Tangente. Aufgrund des Winkels an der Abspritzkante können die Adhäsionskräfte des zweiten Schmiermittels an der Welle besser überwunden werden, als an einer flachen Welle.

In einer Weiterbildung der Erfindung ist vorgesehen, dass der Abschnitt mit sich erweiterndem Radius in einem Längsschnitt der Welle zumindest teilweise einen Kreisbogen beschreibt. Insbesondere beschreibt der Abschnitt mit sich erweiterndem Radius in dem Längsschnitt der Welle einen Kreisbogen. Durch die Formgebung nach Art eines Kreisbogens kann das zweite Schmiermittel an der Abspritzkante besonders vorteilhaft in die Sammeltasche geführt werden. Insbesondere ist eine optimale radiale Beschleunigung des zweiten Schmiermittels und/oder eine besonders vorteilhafte Überwindung der Adhäsionskräfte des zweiten Schmiermittels gewährleistet.

Eine Weiterbildung der Erfindung sieht vor, dass die Sammeltasche die Welle in Umfangsrichtung umgibt, wobei die Sammeltasche und die Abspritzkante bezüglich einer axialen Richtung der Welle in gleicher axialer Position angeordnet sind. Mit anderen Worten ist die Sammeltasche in einer Ebene angeordnet, die senkrecht zur axialen Richtung der Welle ausgerichtet ist und die Abspritzkante schneidet. Mit nochmals anderen Worten ist die Sammeltasche in Umfangsrichtung umlaufend um die Abspritzkante angeordnet. Dadurch ist ein einfaches Führen des zweiten Schmiermittels von der Abspritzkante in die Sammeltasche durch radiales Abspritzen des zweiten Betriebsmittels gewährleistet.

Eine andere Weiterbildung der Erfindung sieht vor, dass die Sammeltasche die Welle in Umfangsrichtung umgibt, wobei die Sammeltasche bezüglich einer axialen Richtung der Welle derart angeordnet ist, dass die Sammeltasche in einem Längsschnitt der Welle in Verlängerung einer Tangente, die an der Welle in dem Abschnitt mit sich erweiterndem Radius anliegt, insbesondere an der Abspritzkante, angeordnet ist. Vorzugsweise ist die Sammeltasche in Verlängerung derjenigen Tangente an der Abspritzkante angeordnet, die Form oder Steigung der Welle auf der der zweiten Seite der Lageranordnung zugewandten Seite der Abspritzkante in einem Längsschnitt durch die Welle charakterisiert. Mit anderen Worten zeigt die erste Mantelfläche und/oder die zweite Mantelfläche, die den Winkel an der Abspritzkante bilden, in die Sammeltasche. Vorzugsweise ist die Sammeltasche in Verlängerung derjenigen der Mantelflächen angeordnet, die Form oder Steigung der Welle auf der der zweiten Seite der Lageranordnung zugewandten Seite der Abspritzkante charakterisiert. Dadurch kann das zweite Schmiermittel besonders gut in die Sammeltasche geführt werden, auch wenn dieses eine axiale Geschwindigkeitskomponente bezüglich der Achsen der Welle aufweist.

In einer Weiterbildung der Erfindung ist das erste Schmiermittel als ein Schmierfett und das zweite Schmiermittel als ein Getriebeöl ausgeführt. Alternativ oder zusätzlich ist die erste Seite und/oder der erste Maschinenteil mittels eines Schmierfettes schmierbar und die zweite Seite und/oder der zweite Maschinenteil mittels eines Getriebeöls schmierbar. Die jeweiligen Seiten beziehungsweise Maschinenteile sind durch die jeweiligen unterschiedlichen Schmiermittel besonders vorteilhaft schmierbar. Da die vorliegende Lageranordnung das Eindringen des zweiten Schmiermittels auf die erste Seite besonders zuverlässig vermeidet, ist ein Einsatz des Schmierfetts als das erste Schmiermittel hier besonders vorteilhaft. Insbesondere kann durch das Verhindern des Eindringens des zweiten Schmiermittels ein Auswaschen des ersten Schmiermittels vermieden werden.

Ein zweiter Aspekt der Erfindung betrifft eine Maschinenanordnung, insbesondere eine Maschinen-Getriebe-Anordnung, mit einer Lageranordnung der oben beschriebenen Art. Dabei ist als der erste Maschinenteil eine Maschine, vorzugsweise eine Kraftmaschine, insbesondere eine elektrische Maschine, beispielsweise ein Elektromotor oder ein Generator, an der Lageranordnung angeordnet. Als der zweite Maschinenteil ist ein Getriebe, insbesondere zur Wandlung einer Kraft und/oder eines Drehmoments des ersten Maschinenteils, an der Lageranordnung angeordnet. Der erste Maschinenteil ist mittels eines ersten Schmiermittels schmierbar und der zweite Maschinenteil ist mittels eines zweiten Schmiermittels schmierbar, wobei das erste Schmiermittel und das zweite Schmiermittel Schmiereigenschaften, physikalische Eigenschaften oder chemische Eigenschaften aufweisen.

Ein dritter Aspekt Erfindung betrifft ein Fahrzeug mit der oben genannten Maschinenanordnung, insbesondere Maschinen-Getriebe-Anordnung. Bei dem Fahrzeug handelt es sich insbesondere um ein Kraftfahrzeug, vorzugsweise um einen Kraftwagen, beispielsweise um einen Lastkraftwagen, einen Pkw oder ein Minenfahrzeug. Der erste Maschinenteil, insbesondere die Maschine, der Maschinenanordnung kann als Fahrmotor ausgebildet sein, um das Fahrzeug zu beschleunigen. Alternativ oder zusätzlich kann der erste Maschinenteil, insbesondere die Maschine, als Arbeitsantrieb ausgebildet sein, und beispielsweise eine Kraft und/oder ein Drehmoment zum Antreiben eines Werkzeugs, eines Förderbandes oder anderen weiteren Fahrzeugfunktion bereitstellen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken. Es zeigen:
- FIG 1: eine schematische Schnittansicht einer Lageranordnung gemäß einer ersten Schnittachse z1 - z1;
- FIG 2: eine schematische Schnittansicht einer Lageranordnung gemäß einer zweiten Schnittachse z2 - z2; und
- FIG 3: eine schematische Vorderansicht einer Lageranordnung.

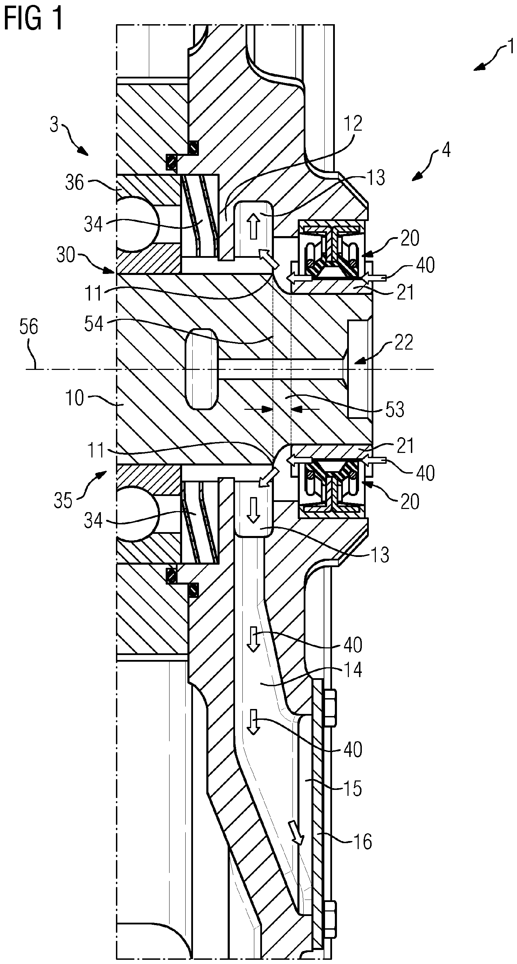

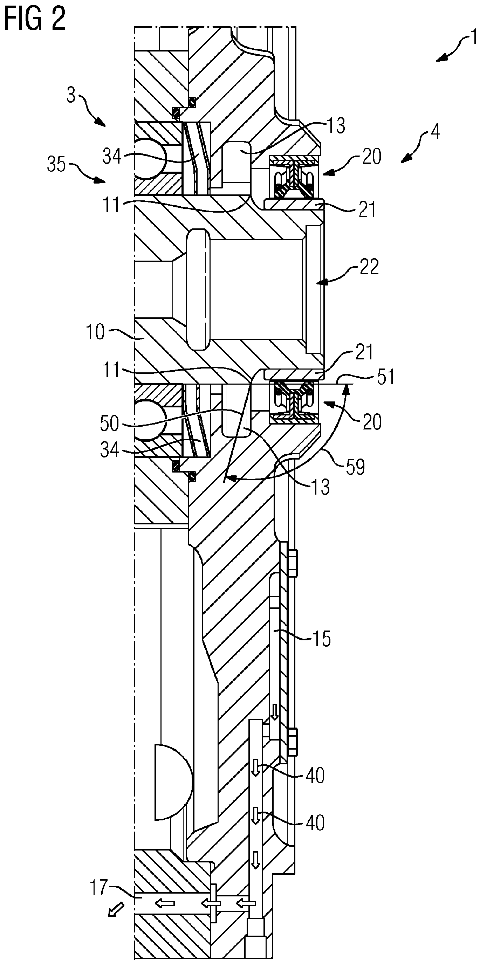

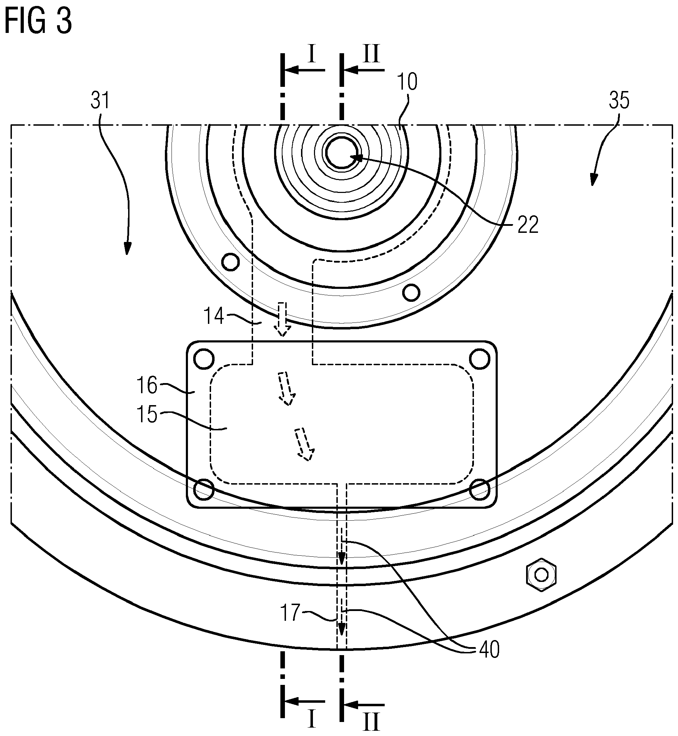

FIG 1 zeigt eine schematische Schnittansicht einer Lageranordnung 1 gemäß einer ersten Schnittachse z1-z1. FIG 2 zeigt dieselbe Lageranordnung in einer Schnittansicht gemäß einer zweiten Schnittachse z2-z2. Die beiden Schnittachsen z1-z11 und z2-z2 sind bezüglich ihrer relativen Lage in FIG 3 eingezeichnet. FIG 3 zeigt dabei eine schematische Vorderansicht der Lageranordnung 1.

Die Lageranordnung 1 weist eine erste Seite 3 und eine zweite Seite 4 auf. Eine Welle 10 ist zur Übertragung einer mechanischen Kraft zwischen der ersten Seite 3 und der zweiten Seite 4 ausgebildet. An der ersten Seite 3 der Lageranordnung 1 ist ein erster Maschinenteil 35 angeordnet, der in Fig. 1 und 2 nur bereichsweise angedeutet ist. In FIG 3 ist der erste Maschinenteil 35 hinter der Lageranordnung 1 angedeutet. Der erste Maschinenteil 35 ist vorzugsweise als Maschine, vorzugsweise als Kraftmaschine, insbesondere als elektrische Maschine, beispielsweise als Elektromotor oder Generator, ausgeführt. Die Welle 10 ist mit dem ersten Maschinenteil 35 vorliegend mechanisch gekoppelt. Insbesondere ist die Welle 10 mit einer weiteren Welle des ersten Maschinenteils 35 einstückig ausgebildet. Der erste Maschinenteil 35 umfasst ein Lager 36, in welchem die Welle 10 zumindest teilweise gelagert ist. Der erste Maschinenteil 35 und/oder das Lager 36 sind mit einem ersten Schmiermittel 30 schmierbar. Insbesondere umfasst der erste Maschinenteil 35 das erste Schmiermittel 30. Das erste Schmiermittel ist vorzugsweise als Schmierfett ausgebildet. Das Lager 36 kann Lagerspanner 34 zum Spannen des Lagers 36 umfassen. Insbesondere kann die Lageranordnung 1 teilweise durch ein Lagerschild 31 des ersten Maschinenteils 35 umfasst oder ausgebildet sein.

An der zweiten Seite 4 der Lageranordnung 1 ist ein zweiter Maschinenteil anordenbar. Insbesondere ist der zweite Maschinenteil an der zweiten Seite 4 angeordnet. Der zweite Maschinenteil ist vorzugsweise als Getriebe, insbesondere zur Umwandlung einer Kraft und/oder eines Drehmoments des ersten Maschinenteils 35, insbesondere der Maschine. Der zweite Maschinenteil und/oder die zweite Seite 4 sind mit einem zweiten Schmiermittel 40 schmierbar ausgeführt. Insbesondere umfasst die zweite Seite und/oder der zweite Maschinenteil das zweite Schmiermittel 40. In der FIG 1, der FIG 2 und der FIG 3 ist das zweite Schmiermittel 40 durch Pfeile dargestellt. Dies ist im weiteren Verlauf noch erläutert. Bei dem zweiten Schmiermittel 40 handelt es sich insbesondere um ein Schmieröl, vorzugsweise ein Getriebeöl. Vorliegend weist die Welle 10 eine Verbindungselement 22 auf, an der eine weitere Welle des zweiten Maschinenteils in axialer Verlängerung anordenbar, insbesondere anflanschbar, ist.

Aus der Lageranordnung 1, dem ersten Maschinenteil 35 und im zweiten Maschinenteil ergibt sich eine Maschinenanordnung. Vorzugsweise ist die Maschinenanordnung als integrierter Antrieb ausgeführt. Bei einem integrierten Antrieb kann der erste Maschinenteil 35 als Motor und der zweite Maschinenteil als Getriebe ausgeführt sein. Der erste Maschinenteil 35 kann über die Lageranordnung 1 direkt an dem zweiten Maschinenteil angeordnet sein. Im Falle eines integrierten Antriebes kann der Motor direkt an dem Getriebe angeflanscht sein. Das erste Schmiermittel 30 und das zweite Schmiermittel 40 können unterschiedliche Schmiereigenschaften, physikalische Eigenschaften oder chemische Eigenschaften aufweisen. Insbesondere wenn das erste Schmiermittel 30 als Schmierfett ausgeführt ist, muss ein Auswaschen des ersten Schmiermittels 30 durch das zweite Schmiermittel 40 ausgeschlossen sein. Ein Eindringen des zweiten Schmiermittels 30 in den ersten Maschinenteil 35, beispielsweise in das Lager 36, kann einen Defekt, beispielsweise einen Lagerschaden oder ein Motorversagen, an dem ersten Maschinenteil 35 hervorrufen.

Die Lageranordnung 1 weist ein Dichtmittel 20 auf, welches ein Eindringen des zweiten Schmiermittels 40 auf die erste Seite 3 vermeidet. Das Dichtmittel 20 ist beispielsweise als Wellendichtring ausgeführt. An der Welle 10 ist ein Innendichtring 21 angeordnet, in dem das Dichtmittel 20 geführt ist. Der Innendichtring 21 kann eine höhere Dichtwirkung des Dichtmittels 20 und/oder einen geringeren Verschleiß an der Welle 10 durch das Dichtmittel 20 erzielen. Das Dichtmittel 20 und/oder der Innendichtring 21 können die Welle 10 in Umfangsrichtung umgreifen. Der Innendichtring 21 kann mit der Welle 10 fest verbunden sein und/oder mit der Welle 10 rotieren. Der Innendichtring 21 ist insbesondere an der Lageranordnung 1 fest angeordnet. Lässt die Dichtwirkung des Dichtmittels 20 nach, beispielsweise aufgrund von Alterung oder Verschleiß, so kann das zweite Schmiermittel 40 gemäß der in FIG 1 dargestellten Pfeile in die erste Seite 3 der Lageranordnung 1 eindringen. Insbesondere bei einem integrierten Antrieb kann keine Möglichkeit gegeben sein, zu erkennen, ob das Dichtmittel 20 dicht oder undicht ist.

Die Welle 10 weist eine Abspritzkante 11 auf, die dazu ausgeformt ist, das zweite Schmiermittel 40 beim Eindringen auf die erste Seite 3 in eine Sammeltasche 13 der Lageranordnung 1 zu führen. Die Sammeltasche 13 ist in Umfangsrichtung um die Welle 10 herum angeordnet. Vorliegend wird die Sammeltasche 13 durch eine Schutzwand 12 ausgebildet. Insbesondere trennt die Schutzwand 12 die Sammeltasche 13 von dem Lager 36 und/oder dem ersten Maschinenteil 35. An der Abspritzkante 11 ist an der Welle 10 ein Bereich 53 angeordnet, an dem sich ein Radius der Welle 10 erweitert. Insbesondere erweitert sich der Radius der Welle 10 in dem Abschnitt 53 von der zweiten Seite 4 ausgehend hin zur ersten Seite 3. Der Abschnitt 53 weist eine Grenze 54 auf, der den Abschnitt 53 mit sich erweiterndem Radius in eine Richtung begrenzt. Insbesondere begrenzt die Grenze 54 den Abschnitt 53 auf der der zweiten Seite 4 abgewandten Seite des Abschnittes 53. An der Grenze 54 ist die Abspritzkante 11 angeordnet. Dringt das zweite Schmiermittel 40 entlang der Welle 10 auf die erste Seite 3 ein, so kann das zweite Schmiermittel 40 aufgrund einer Adhäsionskraft an der Welle 10 haften. In dem Abschnitt 53 erfährt das zweite Schmiermittel 40 eine Beschleunigung in radialer Richtung der Welle 10. Insbesondere in einem Betrieb der Lageranordnung 1 oder des ersten Maschinenteils 35, wenn sich die Welle 10 in Rotation befindet, wird das zweite Schmiermittel 40 in dem Abschnitt 53 aufgrund der Formgebung der Welle 10 radial beschleunigt. Aufgrund einer aus der radialen Beschleunigung resultierenden radialen Geschwindigkeitskomponente des zweiten Schmiermittels 40 kann dies an der Abspritzkante 11 die Adhäsionskraft überwinden und wird in die Sammeltasche 13 geführt.

FIG 2 zeigt eine erste Tangente 50 welche eine Steigung der Welle 10 an der Abspritzkante 11 auf der dem Abschnitt 53 zugewandten Seite charakterisiert. Eine zweite Tangente 51 charakterisiert eine Steigung der Welle 10 auf einer dem Abschnitt 53 abgewandten Seite der Abspritzkante 11. Durch die beiden Tangenten 50, 51 ist gezeigt, dass an der Abspritzkante 11 ein Winkel 55 vorliegt, der einen Winkel von vorliegend höchstens 135° aufweist. In anderen Ausführungsformen kann der Winkel 55 höchstens 90°, 100°, 110° oder 120° betragen. Durch den Winkel 55 kann das zweite Schmiermittel 40 besonders vorteilhaft in die Sammeltasche 13 geführt werden. Insbesondere können durch den Winkel 55 die Adhäsionskräfte des zweiten Schmiermittels 40 an der Welle 10 besonders vorteilhaft überwunden werden.

Vorliegend ist die Welle 10 in dem Abschnitt 53 mit sich erweiterndem Radius bezüglich ihrer Außenkante gemäß eines Kreisbogens geformt. Insbesondere in einem Längsschnitt durch die Welle 10, weist die Welle 10 in dem Abschnitt 53 an ihrer Außenkante die Form des Kreisbogens auf. Durch diese Formgebung der Welle 10 ist eine besonders gute Radialbeschleunigung des zweiten Schmiermittels 40 in dem Bereich 53 und/oder ein besonders vorteilhaftes Auflösen der Adhäsionskräfte an der Abspritzkante 11 gewährleistet.

Die Sammeltasche 13 ist vorliegend bezüglich einer axialen Richtung 56 der Welle 10 in gleicher axialer Position wie die Abspritzkante 11 und/oder die Grenze 54 angeordnet. Insbesondere liegt radial außenseitig der Abspritzkante 11 die Sammeltasche 13. Alternativ oder zusätzlich kann die Sammeltasche 13 in einer Verlängerung der ersten Tangente 50 angeordnet sein. Das zweite Schmiermittel 40 kann durch die Abspritzkante 11 insbesondere entlang der ersten Tangente 50 in die Sammeltasche 13 geführt werden.

Die Lageranordnung 1 umfasst einen Abflusskanal 14. Der Abflusskanal wird zunächst dazu ausgebildet, ein Abfließen des zweiten Schmiermittels 40 aus der Sammeltasche 13 in eine Sammelkammer 15 und/oder zu einem Ablauf 17 zu ermöglichen. Das Abfließen des zweiten Schmiermittels ist in der FIG 1 und FIG 2 durch jeweilige Pfeile gekennzeichnet. Die Sammelkammer 15 kann zum Sammeln des zweiten Schmiermittels ausgebildet sein. Insbesondere ist die Sammelkammer 15 durch einen Nutzer offenbart gestaltet. Insbesondere kann somit durch den Nutzer überprüft werden, ob sich das zweite Schmiermittel 40 in der Sammelkammer 15 angesammelt hat. Außerdem kann die Sammelkammer durch den Nutzer geleert werden. Eine Wandung 16 der Sammelkammer 15 kann zur einfachen Kontrolle von außen einsehbar, insbesondere transparent, beispielsweise aus Glas oder Plexiglas, ausgeführt sein. Alternativ oder zusätzlich kann das zweite Schmiermittel 40 über den Ablauf 17 Abfließen. Beispielsweise ist der Ablauf 17 dazu ausgebildet, das zweite Schmiermittel 40 zu einem Schauglas oder einem externen Sammelbehälter abzuführen. Auf diese Weise kann einer visuellen Kontrolle durch den Nutzer frühzeitig das Eindringen von Öl auf die erste Seite 3 erkannt werden. Insbesondere kann dann ein Austausch des Dichtmittels 20 nötig sein und/oder vorgenommen werden.

Durch das genannte Ausführungsbeispiel ergeben sich mehrere Vorteile. Das Eindringen des zweiten Betriebsmittels auf die erste Seite 3 ist frühzeitig erkennbar. Bei einem Eindringen des zweiten Schmiermittels 40 auf die erste Seite 3 kann ein Eindringen in den ersten Maschinenteil 35, beispielsweise das Lager 36, dennoch wirkungsvoll vermieden sein. Durch den Abflusskanal 14 und/oder den Ablauf 17 kann das Eindringen des zweiten Schmiermittels 40 auf die erste Seite frühzeitig erkannt werden. Dadurch können Wartungsintervalle, insbesondere der Austausch des Dichtmittels 20, an aktuelle Einsatzbedingungen angepasst werden.

Über die Sammeltasche 13 und/oder den Ablaufkanal 14 und/oder die Sammelkammer 15 ist außerdem die Möglichkeit gegeben, das erste Schmiermittel 30 nach dessen Verbrauch abzuführen. Insbesondere im Falle eines Schmierfett als das erste Schmiermittel 30 kann aufgrund der Nutzung unbrauchbar gewordenes Altfett aus dem ersten Maschinenteil 35, beispielsweise dem Lager 36, durch die Sammeltasche 13 abgeführt werden. Die vorliegende Konstruktion ermöglicht somit eine Doppelfunktion der Sammeltasche 13 und/oder des Abflusskanal 14 und/oder der Sammelkammer 15. Das Altfett kann einer Wartung analog dem zweiten Betriebsmittel aus der Sammelkammer 15 entfernt werden. Die Sammeltasche 13 und der Abflusskanal 14 sind derart konstruiert, dass das zweite Schmiermittel, insbesondere das Getriebeöl, immer genug Platz hat um ablaufen zu können.

## Patentansprüche

1. Lageranordnung (1) für eine Maschinenanordnung, mit
- einer ersten Seite (3), an welcher ein mit einem ersten Schmiermittel (30) schmierbarer erster Maschinenteil (35) anordenbar ist,
- einer zweiten Seite (4), an welcher ein mit einem zweiten Schmiermittel (40) schmierbarer zweiter Maschinenteil anordenbar ist, und
- einer Welle (10) zur Übertragung einer mechanischen Kraft zwischen der ersten Seite (3) und der zweiten Seite (4), **dadurch gekennzeichnet, dass**
- die Welle (10) eine Abspritzkante (11) aufweist, die dazu ausgeformt ist, das zweite Schmiermittel (30) beim Eindringen auf die erste Seite (3) in eine Sammeltasche (13) der Lageranordnung (1) zu führen.

2. Lageranordnung (1) nach Anspruch 1, **dadurch gekennzeichnet, dass** die Lageranordnung (1) eine Schutzwand (12) zum Ausformen der Sammeltasche (13) aufweist.

3. Lageranordnung (1) nach Anspruch 1 oder 2, **dadurch gekennzeichnet, dass** die Lageranordnung (1) ein Dichtmittel (20) aufweist, welches die Welle (10) in Umfangsrichtung umgreift und das zweite Schmiermittel (40) beim Eindringen entlang der Welle (10) führt.

4. Lageranordnung (1) nach einem der vorhergehenden Ansprüche, **dadurch gekennzeichnet, dass** die Lageranordnung (1) einen Abflusskanal (14) aufweist, der ein Abfließen des zweiten Schmiermittels (40) aus der Sammeltasche (13) in eine Sammelkammer (15) und/oder zu einem Ablauf (17) ermöglicht.

5. Lageranordnung (1) nach Anspruch 4, **dadurch gekennzeichnet, dass** die Sammelkammer (15) von außen einsehbar gestaltet ist.

6. Lageranordnung (1) nach einem der vorhergehenden Ansprüche, **dadurch gekennzeichnet, dass** die Abspritzkante (11) derart ausgeformt ist, in einem Betrieb der Maschinenanordnung das zweite Schmiermittel (40) beim Eindringen auf die erste Seite (3) zumindest teilweise mittels einer Fliehkraft in die Sammeltasche (13) zu führen.

7. Lageranordnung (1) nach einem der vorhergehenden Ansprüche, **dadurch gekennzeichnet, dass** die Welle (10) einen Abschnitt (53) aufweist, in dem sich von der zweiten Seite (4) ausgehend hin zu der ersten Seite (3) ein Radius der Welle (10) erweitert, wobei an dem Abschnitt (53) mit sich erweiterndem Radius die Abspritzkante (11) gebildet ist.

8. Lageranordnung (1) nach Anspruch 7, **dadurch gekennzeichnet, dass** an der Abspritzkante (11) ein Winkel (55) von höchstens 135° vorliegt.

9. Lageranordnung (1) nach Anspruch 7 oder 8, **dadurch gekennzeichnet, dass** der Abschnitt (53) mit sich erweiterndem Radius in einem Längsschnitt der Welle (10) einen Kreisbogen beschreibt.

10. Lageranordnung (1) nach einem der vorhergehenden Ansprüche, **dadurch gekennzeichnet, dass** die Sammeltasche (13) die Welle (10) in Umfangsrichtung umgibt, wobei die Sammeltasche (13) und die Abspritzkante (11) bezüglich einer axialen Richtung (56) der Welle in gleicher axialer Position angeordnet sind.

11. Lageranordnung (1) nach einem der Ansprüche 7 bis 10, **dadurch gekennzeichnet, dass** die Sammeltasche (13) die Welle in Umfangsrichtung umgibt, wobei die Sammeltasche (13) bezüglich einer axialen Richtung (56) der Welle (10) derart angeordnet ist, dass die Sammeltasche (13) in einem Längsschnitt der Welle (10) in Verlängerung einer Tangente (50), die an der Welle in dem Abschnitt (53) mit sich erweiterndem Radius an der Abspritzkante (11) anliegt, angeordnet ist.

12. Lageranordnung (1) nach einem der vorhergehenden Ansprüche, **dadurch gekennzeichnet, dass** das erste Schmiermittel (30) als ein Schmierfett und das zweite Schmiermittel (40) als ein Getriebeöl ausgeführt ist.

13. Maschinenanordnung mit einer Lageranordnung (1) nach einem der vorhergehenden Ansprüche, wobei als der erste Maschinenteil (35) eine Maschine und als der zweite Maschinenteil ein Getriebe an der Lagerordnung (1) angeordnet ist.

14. Fahrzeug mit einer Maschinenanordnung nach Anspruch 13.
